# EUROPEAN PATENT APPLICATION

(11) **EP 4 322 314 A1**
(43) Date of publication of application: **14.02.2024**
(21) Application number: 22794562.3
(22) Date of filing: 08.04.2022
(51) Int. Cl.: H01M 50/531, H01M 10/058

(54) **LITHIUM BATTERY AND PREPARATION METHOD THEREFOR**

(30) Priority: 30.04.2021 CN 202110480322
(71) Applicant: Svolt Energy Technology (Wuxi) co., Ltd., Jiangsu 214105 (CN)
(72) Inventor: NING, Yajun, Wuxi, Jiangsu 214105 (CN); XIA, Tianjun, Wuxi, Jiangsu 214105 (CN); YU, Dongpeng, Wuxi, Jiangsu 214105 (CN); JI, Jiashuai, Wuxi, Jiangsu 214105 (CN)
(74) Representative: Groth & Co. KB
(86) International application number: PCT/CN2022/085911
(87) International publication number: WO 2022/228091

(57) **Abstract**

The present application relates to the technical field of batteries, and provides a lithium battery and a method for preparing a lithium battery. The method for preparing a lithium battery described in the present application includes the following steps: S 1, connecting, after insulating connection of a positive electrode connecting sheet and a positive electrode cover plate component, a side of the positive electrode connecting sheet facing back to the positive electrode cover plate component with a positive electrode end of a cell electrode group, to form a cell electrode group component; S2, placing the cell electrode group component into a housing from a negative electrode end of the housing, and clamping the positive electrode cover plate component into a positive electrode end of the housing, to enable a periphery of the positive electrode cover plate component to be connected with the housing; S3, connecting a negative electrode connecting sheet with a negative electrode end of the cell electrode group, connecting a protruding side of a first connecting portion of the negative electrode cover plate with the negative electrode connecting sheet, and connecting a second connecting portion of the negative electrode cover plate with the negative electrode end of the housing; and S4, connecting a sealing sheet with an end opening of a liquid injection hole away from the positive electrode connecting sheet. The lithium battery obtained through the method for preparing a lithium battery of the present application can increase an internal space of a cell and improve a battery capacity and an energy density.

## Description

The present application claims priority to the Chinese patent application 202110480322.0 filed to the China Patent Office on April 30, 2021 and entitled "Lithium Battery and Preparation Method Thereof, and all content of which is incorporated herein by reference.

### TECHNICAL FIELD

The present application relates to the technical field of batteries, in particular to a lithium battery and a method for preparing a lithium battery.

### BACKGROUND

A lithium battery is a type of rechargeable battery, and mainly relies on movement of lithium ions between a positive electrode and a negative electrode to work. The lithium battery may be divided into a winding type and a laminated type from a production process, each including a positive plate, a diaphragm and a negative plate stacked in turn, and the positive plate, the diaphragm and the negative plate may be wound layer by layer in the same direction to form a cylindrical lithium battery cell, or the positive plate, the diaphragm and the negative plate may also be stacked layer by layer in the same direction to form a square lithium battery cell. Compared with other types of batteries such as a lead acid battery and a cadmium nickel battery, the lithium battery has the advantages of a large specific capacity, a high operating voltage, a fast charging speed, a wide operating temperature range, a long cycle life, a small size, a small weight, etc., and therefore is widely applied to electric vehicles, mobile communication terminals, medical instruments, navigation, aerospace and other fields.

A structural part of the lithium battery is also an important component of a lithium-ion power battery, which not only provides guarantee for safety and reliability of the lithium battery, but also takes into account a connection between an internal chemical system of the lithium battery and an external module. Due to the facts that various connection relations exist in structural parts and meanwhile the requirements of sealing performance and overcurrent performance need to be taken into account, a design solution of the structural parts is particularly important. With the improvement of the requirements for fast charging and discharging of batteries, the requirement for overcurrent capacity and safety capacity of the lithium battery gets higher and higher, so high-rate performance of the structural parts represents the general trend. However, a traditional cover plate structure may no longer meet a high-rate overcurrent requirement of the lithium battery cell, during installation, slot rolling needs to be performed on a housing, and an internal space of the cell is limited, which is not conducive to increasing a battery capacity and an energy density.

### SUMMARY OF THE INVENTION

In view of this, the present application aims to provide a lithium battery, to increase an internal space of a cell, which is conducive to improving a battery capacity and an energy density.

In order to achieve the above objectives, the technical solution of the present application is implemented as follows:
a lithium battery includes a housing, a positive electrode cover plate component, a positive electrode connecting sheet, a negative electrode cover plate, a negative electrode connecting sheet, a cell electrode group located in the housing, and a sealing sheet, a positive electrode end of the cell electrode group is connected with the positive electrode connecting sheet, a negative electrode end of the cell electrode group is connected with the negative electrode connecting sheet, a side of the positive electrode connecting sheet facing back to the cell electrode group is in insulating connection with the positive electrode cover plate component, a side of the negative electrode connecting sheet facing back to the cell electrode group is connected with the negative electrode cover plate, the positive electrode cover plate component is provided with a liquid injection hole, and an end opening of the liquid injection hole away from the positive electrode connecting sheet is connected with the sealing sheet.

A projection area of the positive electrode cover plate component is less than a projection area of the positive electrode connecting sheet in a thickness direction of the positive electrode connecting sheet, the negative electrode cover plate includes a negative electrode cover plate body, a first connecting portion connected with a periphery of the negative electrode cover plate body and a second connecting portion connected with a periphery of the first connecting portion, the first connecting portion is arranged as an annular boss protruding towards the negative electrode connecting sheet, a positive electrode end of the housing is connected with a periphery of the positive electrode cover plate component, and a negative electrode end of the housing is connected with the second connecting portion.

Optionally, the positive electrode cover plate component includes a fastener, a sealing ring and a substrate, an insulating sheet is arranged between the substrate and the positive electrode connecting sheet, the sealing ring, the insulating sheet and the positive electrode connecting sheet sleeve the fastener in turn, the substrate sleeves a periphery of the sealing ring, and is supported on the insulating sheet, the fastener is welded with the positive electrode connecting sheet, the fastener is provided with a step hole penetrating through the fastener, the sealing sheet is clamped into one end of the step hole away from the positive electrode connecting sheet and is in sealed connection with the fastener, and the liquid injection hole is located at one end of the step hole close to the positive electrode connecting sheet.

Optionally, an insulating ring is arranged between the fastener and the substrate, the insulating ring sleeves the periphery of the sealing ring and a periphery of the fastener, an upper surface of the substrate is provided with a sinking table, the sinking table is provided with a substrate through hole used for installing the sealing ring, and a periphery of the insulating ring is connected with an internal periphery of the sinking table.

Optionally, a periphery of the substrate is provided with a substrate boss extending in a direction away from the substrate, a positive electrode end of the housing is provided with a positive electrode connecting opening matching with the substrate boss, and the substrate is clamped into the positive electrode connecting port and is in sealed connection with the housing.

Optionally, the negative electrode connecting sheet includes a negative electrode connecting sheet body and a negative electrode cover plate connecting portion used for being connected with the first connecting portion, and a thickness of the negative electrode cover plate connecting portion is greater than a thickness of the first connecting portion.

Compared with the prior art, the lithium battery of the present application has the following advantages:
(1) according to the lithium battery of the present application, the projection area of the positive electrode cover plate component is less than the projection area of the positive electrode connecting sheet in the thickness direction of the positive electrode connecting sheet, to realize direct welding on a side of the positive electrode connecting sheet connected with the positive electrode cover plate component during connecting and fixing of the positive electrode connecting sheet and the cell electrode group, which improves whole structural stability of the lithium battery; the negative electrode cover plate includes the negative electrode cover plate body, the first connecting portion and the second connecting portion, the first connecting portion on the negative electrode cover plate is welded with the negative electrode connecting sheet, so that the negative electrode connecting sheet may be better fit with the negative electrode cover plate, a welding area is large, a process is easy to operate, and the overcurrent capability is high; and the positive electrode cover plate component and the negative electrode cover plate are respectively sealed in a mode of welding with the housing, which not only improves the sealing performance of the connection between the housing and the cover plate, but also eliminates the limit of the cell electrode group by a groove rolling process of the housing, and then a space, containing the cell electrode group, in the housing may be increased, which is conducive to increasing the battery capacity and the energy density.
(2) According to the lithium battery of the present application, the thickness of the negative electrode cover plate connecting portion is set to be greater than the thickness of the first connecting portion, when laser penetration welding is performed from the first connecting portion, weld penetration of the negative electrode connecting sheet may be effectively avoided to ensure the whole performance of the lithium battery; and the positive electrode end of the housing is provided with the positive electrode connecting port matching with the substrate boss, the substrate is clamped into the positive electrode connecting port to be in sealed connection with the housing, which not only facilitates welding, but also may improve the sealing performance in the housing.

Another objective of the present application is to propose a method for preparing a lithium battery, to increase an internal space of a cell, which is conducive to increasing a battery capacity and an energy density.

In order to achieve the above objective, the technical solution of the present application is achieved as follows:
a method for preparing a lithium battery includes the following steps:
S 1, connecting, after insulating connection of a positive electrode connecting sheet and a positive electrode cover plate component, a side of the positive electrode connecting sheet facing back to the positive electrode cover plate component with a positive electrode end of a cell electrode group, to form a cell electrode group component, wherein the positive electrode cover plate component is provided with a liquid injection hole, and a projection area of the positive electrode cover plate component is less than a projection area of the positive electrode connecting sheet in a thickness direction of the positive electrode connecting sheet;
S2, placing the cell electrode group component into a housing from a negative electrode end of the housing, to enable the positive electrode cover plate component to be clamped into a positive electrode end of the housing, and connecting a periphery of the positive electrode cover plate component with the housing;
S3, connecting a negative electrode connecting sheet with a negative electrode end of the cell electrode group, connecting a protruding side of a first connecting portion of the negative electrode cover plate with the negative electrode connecting sheet, and connecting a second connecting portion of the negative electrode cover plate with the negative electrode end of the housing, wherein the negative electrode cover plate includes a negative electrode cover plate body, the first connecting portion connected with a periphery of the negative electrode cover plate body and the second connecting portion connected with a periphery of the first connecting portion, and the first connecting portion is arranged as an annular boss protruding towards the negative electrode connecting sheet; and
S4, connecting a sealing sheet with an end opening of a liquid injection hole away from the positive electrode connecting sheet.

Optionally, the positive electrode connecting sheet is provided with a positive electrode welding plane, the negative electrode connecting sheet is provided with a negative electrode welding plane, the positive electrode connecting sheet and the cell electrode group are welded from a side of the positive electrode welding plane facing back to the cell electrode group, and the negative electrode connecting sheet and the cell electrode group are welded from a side of the negative electrode welding plane facing back to the cell electrode group.

Optionally, the negative electrode connecting sheet includes a negative electrode connecting sheet body and a negative electrode cover plate connecting portion used for being connected with the first connecting portion, the negative electrode welding plane is located on the negative electrode connecting sheet body, the negative electrode cover plate connecting portion and the first connecting portion are welded from a side of the first connecting portion facing back to the negative electrode connecting sheet, and the second connecting portion and the negative electrode end of the housing are welded from outer edges of the second connecting portion and the housing.

Optionally, the positive electrode cover plate component includes a fastener, a sealing ring and a substrate, an insulating sheet is arranged between the substrate and the positive electrode connecting sheet, the sealing ring, the insulating sheet and the positive electrode connecting sheet sleeve the fastener in turn, the substrate sleeves a periphery of the sealing ring, and is supported on the insulating sheet, the fastener is welded with the positive electrode connecting sheet, the fastener is provided with a step hole penetrating through the fastener, the sealing sheet is clamped into one end of the step hole away from the positive electrode connecting sheet and is welded with the fastener, and the liquid injection hole is located at one end of the step hole close to the positive electrode connecting sheet.

Optionally, a periphery of the substrate is provided with a substrate boss extending in a direction away from the substrate, the positive electrode end of the housing is provided with a positive electrode connecting opening matching with the substrate boss, and the substrate is clamped into the positive electrode connecting port and is welded with the housing.

The method for preparing a lithium battery and the lithium battery above have the same advantages compared with the prior art, which is not repeated here.

Other features and advantages of the present application will be described in detail in the subsequent specific implementations.

### BRIEF DESCRIPTION OF THE DRAWINGS

Accompanying drawings that form part of the present application are intended to provide a further understanding of the present application, and a schematic implementation of the present application and its description are used to interpret the present application and do not constitute an undue limit of the present application. In the accompanying drawings:
Fig. 1 is a schematic structural diagram of a specific implementation of a lithium battery of the present application.
Fig. 2 is a schematic structural diagram of a specific implementation of a cell electrode group component of the present application.
Fig. 3 is a schematic structural diagram of placement of a cell electrode group component into a housing shown in Fig. 2.
Fig. 4 is a schematic structural diagram of a connection of a positive electrode cover plate component in the cell electrode group component with a housing shown in Fig. 2.
Fig. 5 is a schematic structural diagram of a connection of a negative electrode connecting sheet with a cell electrode group of the present application.
Fig. 6 is a schematic structural diagram of a connection of a negative electrode cover plate with a negative electrode connecting sheet and a housing of the present application.
Fig. 7 is a schematic structural diagram of a connection of a sealing sheet with a positive electrode cover plate component of the present application.
Fig. 8 is a schematic structural diagram of a specific implementation of a positive electrode connecting sheet of the present application.
Fig. 9 is a schematic structural diagram of a specific implementation of a negative electrode cover plate and a negative electrode connecting sheet of the present application.
Fig. 10 is a schematic structural diagram of a specific implementation of a positive electrode cover plate component of the present application.

Reference numerals for accompanying drawings:

| | | | |
|---|---|---|---|
| 1 | Housing | 11 | Positive electrode connecting port |
| 2 | Positive electrode cover plate component | 21 | Fastener |
| 22 | Sealing ring | 23 | Substrate |
| 231 | Substrate boss | 232 | Sinking table |
| 233 | Substrate through hole | 24 | Insulating ring |
| 3 | Positive electrode connecting sheet | 31 | Positive electrode welding plane |
| 32 | Positive electrode reinforcement structure | 4 | Negative electrode cover plate |
| 41 | Negative electrode cover plate body | 42 | First connecting portion |
| 43 | Second connecting portion | 5 | Negative electrode connecting sheet |
| 51 | Negative electrode connecting sheet body | 52 | Negative electrode cover plate connecting portion |
| 53 | Negative electrode welding plane | 54 | Negative electrode reinforcement structure |
| 6 | Cell electrode group | 7 | Sealing sheet |
| 8 | Liquid injection hole | 9 | Insulating sheet |
| a | Welding direction of a positive electrode connecting sheet and a cell electrode group | | |
| b | Welding direction of a housing and a positive electrode cover plate component | | |
| c | Welding direction of a negative electrode connecting sheet and a cell electrode group | | |
| d | Welding direction of a negative electrode cover plate and a negative electrode connecting sheet | | |

### DETAILED DESCRIPTION

It should be noted that implementations in the present application and features in the implementations may be combined with one another in a case of not conflict.

In addition, an azimuth or position relation indicated by terms "inside", "outside", "top", "bottom", etc. mentioned in the implementations of the present application is based on an orientation or position relation shown in the accompanying drawings. Based on a housing 1, "top" refers to a top when the housing 1 is placed on a horizontal plane, correspondingly, "bottom" refers to a bottom when the housing 1 is placed on the horizontal plane, "inside" refers to an inside of the housing 1, and "outside" refers to an outside of the housing 1. The terms are based on the azimuth or position relation shown in the accompanying drawings, rather than indicating or hinting that an apparatus or element referred to must have a specific azimuth, and be constructed and operated in a specific azimuth, and therefore cannot be construed as a limitation of the present application.

It should be noted that, unless otherwise expressly specified and limited, terms "connection", "installation", "contact" should be understood in a broad sense, for example, the connection may be a fixed connection, may also be a detachable connection, or be an integrated connection, may be a direct connection, may also be an indirect connection through an intermediate medium, or may be a communication inside two parts, or an interactive relationship of the two parts. For those ordinarily skilled in the art, the specific meaning of above terms in the present application may be understood according to specific conditions.

The present application is described in detail below with reference to the accompanying drawings and in conjunction with the implementations.

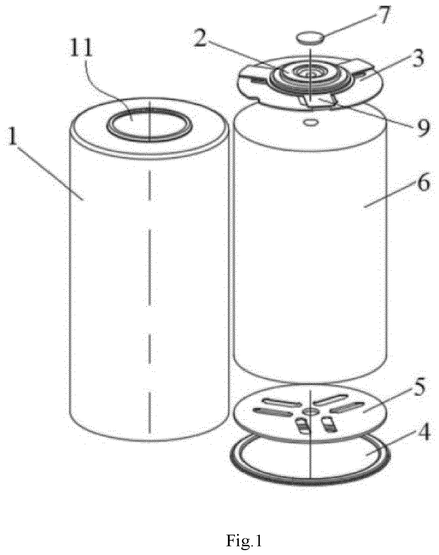

A lithium battery provided by a first aspect of the present application, referring to Fig. 1 to Fig. 9, includes a housing 1, a positive electrode cover plate component 2, a positive electrode connecting sheet 3, a negative electrode cover plate 4, a negative electrode connecting sheet 5, a cell electrode group 6 located in the housing 1 and a sealing sheet 7, a positive electrode end of the cell electrode group 6 is connected with the positive electrode connecting sheet 3, a negative electrode end of the cell electrode group 6 is connected with the negative electrode connecting sheet 5, a side of the positive electrode connecting sheet 3 facing back to the cell electrode group 6 is in insulating connection with the positive electrode cover plate component 2, a side of the negative electrode connecting sheet 5 facing back to the cell electrode group 6 is connected with the negative electrode cover plate 4, the positive electrode cover plate component 2 is provided with a liquid injection hole 8, and an end opening of the liquid injection hole 8 away from the positive electrode connecting sheet 3 is connected with the sealing sheet 7; and a projection area of the positive electrode cover plate component 2 is less than a projection area of the positive electrode connecting sheet 3 in a thickness direction of the positive electrode connecting sheet 3, the negative electrode cover plate 4 includes a negative electrode cover plate body 41, a first connecting portion 42 connected with a periphery of the negative electrode cover plate body 41 and a second connecting portion 43 connected with a periphery of the first connecting portion 42, the first connecting portion 42 is arranged as an annular boss protruding towards the negative electrode connecting sheet 5, a positive electrode end of the housing 1 is connected with a periphery of the positive electrode cover plate component 2, and a negative electrode end of the housing 1 is connected with the second connecting portion 43.

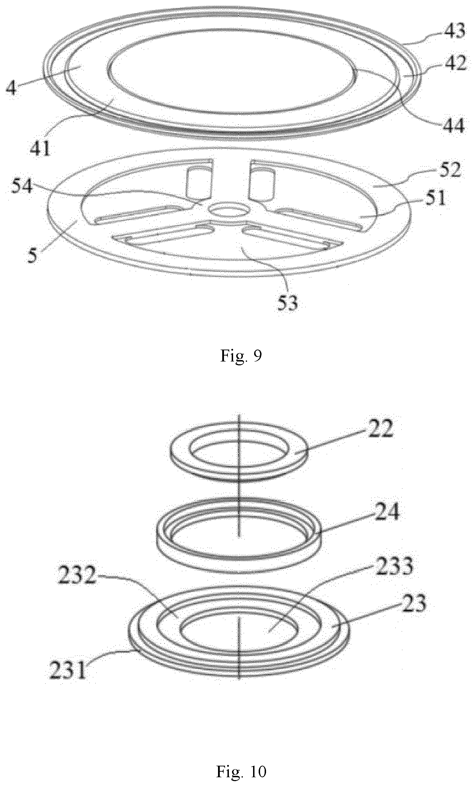

According to the present application, the cell electrode group 6 may be cylindrical, may also be square or be in other shapes, correspondingly, shapes of other structural parts in the lithium battery may be correspondingly designed according to the cell electrode group 6 and its arrangement mode, preferably, the core electrode group 6 is cylindrical, and the positive electrode connecting sheet 3 and the negative electrode connecting sheet 5 are both arranged as circles; and the insulating connection of the positive electrode cover plate component 2 and the positive electrode connecting sheet 3 may be separated by arranging any insulating structural part between the positive electrode cover plate component 2 and the positive electrode connecting sheet 3, for example, an insulating sheet 9 is arranged between the positive electrode cover plate component 2 and the positive electrode connecting sheet 3. The positive electrode cover plate component 2, the positive electrode connecting sheet 3 and the insulating sheet 9 are connected into a whole, which may be integrally formed in a machining process and may also be connected into one in a fixing mode like welding. Referring to Fig. 9, the first connecting portion 42 is arranged as the annular boss protruding towards the negative electrode connecting sheet, which specifically means that the first connecting portion 42 is bent from the negative electrode cover plate body 41 and the second connecting portion 43 towards the direction of the negative electrode connecting sheet 5, and then bent to a state of being parallel to or approximately parallel to the negative electrode cover plate body 41 and the second connecting portion 43.

It may be understood that in the present application, one end of the housing 1 connected with the positive electrode cover plate component 2 is a positive electrode end of the housing 1, one end of the housing 1 connected with the second connecting portion 43 is a negative electrode end of the housing 1, the negative electrode end of the housing 1 is in an opening shape and is matched with a periphery of the positive electrode cover plate component 2, the negative electrode end of the housing 1 is in an opening shape and is matched with the negative electrode cover plate 4, a projection area of the negative electrode cover plate 4 is greater than a projection area of the positive electrode cover plate component 2, and an opening of the positive electrode end of the housing 1 is arranged to be less than an opening of the negative electrode end; and similarly, one end of the cell electrode group 6 connected with the positive electrode connecting sheet 3 is a positive electrode end of the cell electrode group 6, and one end of the cell electrode group 6 connected with the negative electrode connecting sheet 5 is a negative electrode end of the cell electrode group 6.

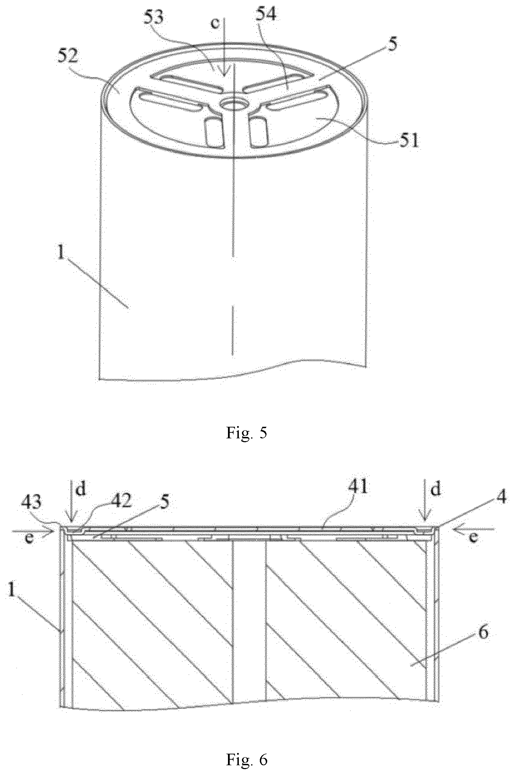

According to the lithium battery provided by the above basic solution, the positive electrode cover plate component 2 and the negative electrode cover plate 4 are respectively sealed with the housing 1 in a mode of welding, and the liquid injection hole 8 and the sealing sheet 7 are sealed in a welding mode, which not only improves sealing performance of the connection between the housing 1 and the cover plate, but also eliminates the limit of the cell electrode group 6 by a groove rolling process of the housing 1, so that a space, containing the cell electrode group 6, inside the housing 1, can be increased, which is conductive to increasing the battery capacity and the energy density. Structural design of the housing 1, the positive electrode cover plate component 2 and the negative electrode cover plate 4 of the lithium battery facilitates an operation of welding sealing in an assembly process. The projection area of the positive electrode cover plate component 2 is less than the projection area of the positive electrode connecting sheet 3, to realize direct welding on a side of the positive electrode connecting sheet 3 connected with the positive electrode cover plate component 2 during connecting and fixing of the positive electrode connecting sheet 3 and the cell electrode group 6, which improves whole structural stability of the lithium battery. The negative electrode cover plate 4 includes the negative electrode cover plate body 41, the first connecting portion 42 and the second connecting portion 43, referring to Fig. 6, a side of the first connecting portion 42 facing back to the negative electrode connecting sheet 5 is welded from a welding direction d, then the negative electrode cover plate 4 and the negative electrode connecting sheet 5 may be connected, so that the negative electrode connecting sheet 5 and the negative electrode cover plate 4 may be better fit, a welding area is large, a process is easy to operate, an overcurrent capacity is high, and the second connecting portion 43 is used for being in lap joint with an edge of an opening end of the housing 1, welding is performed from a welding direction e, so that the negative electrode cover plate 4 and the housing 1 may be connected.

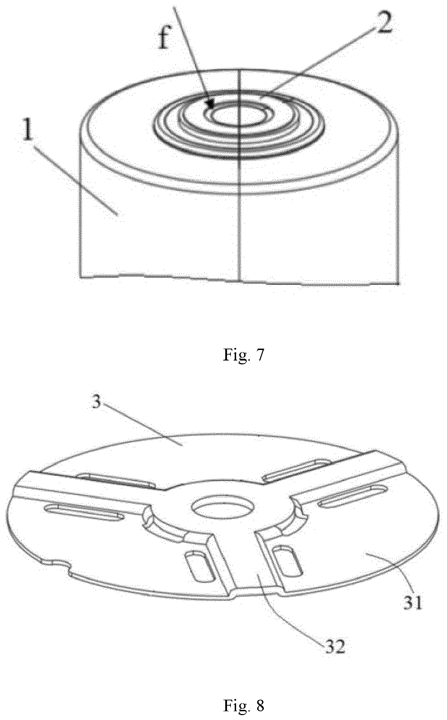

As a preferred implementation of the positive electrode cover plate component 2 and the positive electrode connecting sheet 3 in the present application, referring to Fig. 1 and Fig. 8, the positive electrode connecting sheet 3 includes a positive electrode reinforcement structure 32 protruding towards the insulating sheet 9 and a positive electrode welding plane 31 connected with the positive electrode reinforcement structure 32, and a thickness of the positive electrode reinforcement structure 32 is greater than that of the positive electrode welding 31. A ratio of a projection area of the positive electrode cover plate component 2 to that of the positive electrode connecting sheet 3 in a thickness direction of the positive electrode connecting sheet 3 is (1-9): 16, a shape of the insulating sheet 9 corresponds to the shape of the positive electrode reinforcement structure 32, a projection area of the insulating sheet 9 is also less than that of the positive electrode connecting sheet 3 in the thickness direction of the positive electrode connecting sheet 3, so as to be able to cover the positive electrode reinforcement structure 32, and avoid the positive electrode welding plane 31, so that a welding operation may be performed on the positive electrode welding plane 31. The positive electrode reinforcement structure 32 can improve structural strength of the positive electrode connecting sheet 3, and control an area proportion of the positive electrode cover plate component 2 and the insulating sheet 9 covering the positive electrode connecting sheet 3 within a certain range, so that a weldable region on the positive electrode welding plane 31 meets a demand of a connection of the positive electrode welding plane and other structural parts like the cell electrode group 6, and welding stability of a whole structure is ensured. Specifically, when the positive electrode cover plate component 2 and the positive electrode connecting sheet 3 are arranged as circles, a ratio of a projection diameter of the positive electrode cover plate component 2 to a projection diameter of the positive electrode connecting sheet 3 is (1-3):4.

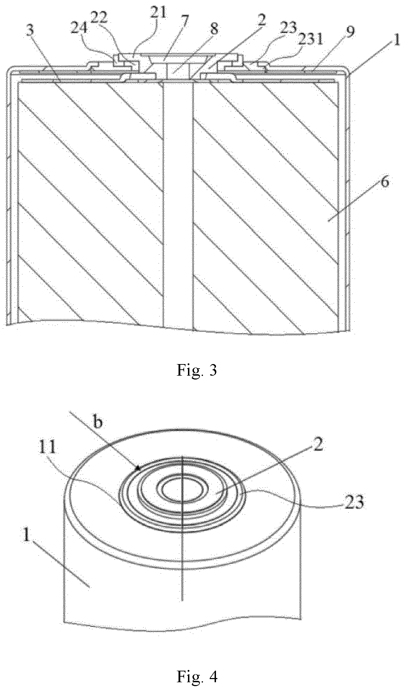

According to the present application, the positive electrode cover plate component 2 may adopt a conventional cover plate structure of a battery housing, as a preferred implementation of the positive electrode cover plate component 2 in the present application, referring to Fig. 3 and Fig. 10, the positive electrode cover plate component 2 includes a fastener 21, a sealing ring 22 and a substrate 23, the insulating sheet 9 is arranged between the substrate 23 and the positive electrode connecting sheet 3, the sealing ring 22, the insulating sheet 9 and the positive electrode connecting sheet 3 sleeve the fastener 21 in turn, the substrate 23 sleeves a periphery of the sealing ring 22, and is supported on the insulating sheet 9, the fastener 21 is welded with the positive electrode connecting sheet 3, the fastener 21 is provided with a step hole penetrating through the fastener 21, the sealing sheet 7 is clamped into one end of the step hole away from the positive electrode connecting sheet 3 and is in sealed connection with the fastener 21, and the liquid injection hole 8 is located at one end of the step hole close to the positive electrode connecting sheet 3.

It needs to be noted that the fastener 21 may adopt a conventional rivet structure, that is, including a rivet head and a rivet rod, when a battery cover plate is assembled, the sealing ring 22 is installed at one end of the rivet rod close to the rivet head, and one end of the rivet rod away from the rivet head is connected with the positive electrode connecting sheet 3. Structural parts sleeving the fastener 21, including the sealing ring 22, the insulating sheet 9 and the positive electrode connecting sheet 3, are each provided with a through hole or groove suitable for installing the fastener 21; and the substrate 23 may be arranged as a metal plate, such as a steel plate and an aluminum plate. The step hole on the fastener 21 is arranged as that a diameter of one end away from the positive electrode connecting sheet 3 is greater than that of one end close to the positive electrode connecting sheet 3, the sealing sheet 7 and the fastener 21 are in sealed connection in a welding mode, preferably, laser welding.

As another preferred implementation of the positive electrode cover plate component 2 in the present application, referring to Fig. 10, an insulating ring 24 is arranged between the fastener 21 and the substrate 23, the insulating ring 24 sleeves the periphery of the sealing ring 22 and the periphery of the fastener 21, an upper surface of the substrate 23 is provided with a sinking table 232, the sinking table 232 is provided with a substrate through hole 233 used for installing the sealing ring 22, and a periphery of the insulating ring 24 is connected with an internal periphery of the sinking table 232. The insulating ring 24 enables the substrate 23 and the fastener 21 to be in insulating connection, safety of the positive electrode cover plate component 2 is reinforced, the insulating ring 24 is located in the sinking table 232 of the substrate 23, installation is stable, and the insulating effect is good.

As yet another preferred implementation of the positive electrode cover plate component 2 in the present application, a periphery of the substrate 23 is provided with a substrate boss 231 extending in a direction away from the substrate 23, a positive electrode end of the housing 1 is provided with a positive electrode connecting port 11 matching with the substrate boss 231, and the substrate 23 is clamped into the positive electrode connecting port 11 and is in sealed connection with the housing 1. Specifically, an edge of the positive electrode connecting port 11 is in lap joint with the substrate boss 231 and is flat with the top of the substrate 23, referring to Fig. 4, the housing 1 and the substrate 23 may be welded in a welding direction b, and the substrate boss 231 can facilitate connection of the substrate 23 and the positive electrode end of the housing 1 and meanwhile enables the substrate 23 to be better supported on the insulating sheet 9.

As a preferred implementation of the negative electrode connecting sheet 5 in the present application, referring to Fig. 9, the negative electrode connecting sheet 5 includes a negative electrode connecting sheet body 51 and a negative electrode cover plate connecting portion 52 used for being connected with the first connecting portion 42, and a thickness of the negative electrode cover plate connecting portion 52 is greater than a thickness of the first connecting portion 42, so that weld penetration of the negative electrode connecting sheet 5 can be effectively avoided when laser penetration welding is performed from the first connecting portion 42, so as to ensure whole performance of the lithium battery.

As a preferred implementation of the negative electrode connecting sheet 5 in the present application, the negative electrode connecting sheet body 51 includes a negative electrode welding plane 53 and a negative electrode reinforcement structure 54 connected with the negative electrode welding plane 53, the negative electrode reinforcement structure 54 protrudes towards the negative electrode cover plate 4 relative to the negative electrode welding plane 53, and a thickness of the negative electrode reinforcement structure 54 is greater than a thickness of the negative electrode welding plane 53. The thickness of the negative electrode welding plane 53 is smaller, which not only facilitates welding of the negative electrode connecting sheet 5 and the cell electrode group 6 from the negative electrode welding plane 53, but also can reinforce whole strength of the negative electrode connecting sheet 5.

Optionally, the negative electrode cover plate connecting portion 52 is connected with a periphery of the negative electrode connecting sheet body 51, a thickness of the negative electrode cover plate connecting portion 52 is the same as that of the negative electrode reinforcement structure 54, so that a structure of the negative electrode connecting sheet 5 is flatter, which is more beneficial to machining and production.

As a preferred implementation of the positive electrode reinforcement structure 32 and the negative electrode reinforcement structure 54 in the present application, referring to Fig. 8 and Fig. 9, the positive electrode reinforcement structure 32 and the negative electrode reinforcement structure 54 respectively include a reinforcement boss and at least one strip-shaped boss, the reinforcement bosses are located in a central region of the positive electrode connecting sheet 3 or the negative electrode connecting sheet body 51, and the strip-shaped bosses are arranged to extend from the reinforcement bosses to an outer side. Preferably, a plurality of strip-shaped bosses are arranged and are evenly distributed on the positive electrode connecting sheet 3 or the negative electrode connecting sheet body 51, so as to improve the whole structural strength of the positive electrode connecting sheet 3 and the negative electrode connecting sheet 5, so that the positive electrode connecting sheet 3 and the negative electrode connecting sheet 5 can be designed to have a larger size.

According to the present application, groove holes used for permeating of an electrolyte are formed in the positive electrode connecting sheet 3 and the negative electrode connecting sheet body 51, the groove holes are located on the positive electrode welding plane 31 or the negative electrode welding plane 53 and are located on one side or two sides of the strip-shaped bosses, specifically, the groove holes are arranged as strip-shaped through holes extending in a length direction of the strip-shaped bosses corresponding to the groove holes, so that a permeation effect of the electrolyte can be better promoted, and operation efficiency of a cell of the lithium battery is improved.

Based on the technical solution of the above lithium battery, a second aspect of the present application provides a method for preparing a lithium battery, referring to Fig. 1 to Fig. 7, including the following steps:
S1, after in-turn connection of a positive electrode connecting sheet 3, an insulating sheet 9 and a positive electrode cover plate component 2, a side of the positive electrode connecting sheet 3 facing back to the positive electrode cover plate component 2 is connected with a positive electrode end of a cell electrode group 6, to form a cell electrode group component, wherein the positive electrode cover plate component 2 is provided with a liquid injection hole 8, and a projection area of the positive electrode cover plate component 2 is less than a projection area of the positive electrode connecting sheet 3 in a thickness direction of the positive electrode connecting sheet 3;
S2, the cell electrode group component is placed into a housing 1 from a negative electrode end of the housing 1, to enable the positive electrode cover plate component 2 to be clamped into a positive electrode end of the housing 1, and a periphery of the positive electrode cover plate component 2 is connected with the housing 1;
S3, a negative electrode connecting sheet 5 is connected with a negative electrode end of the cell electrode group 6, a protruding side of a first connecting portion 42 of a negative electrode cover plate 4 is connected with the negative electrode connecting sheet 5, and a second connecting portion 43 of the negative electrode cover plate 4 is connected with the negative electrode end of the housing 1, wherein the negative electrode cover plate 4 includes a negative electrode cover plate body 41, the first connecting portion 42 connected with a periphery of the negative electrode cover plate body 41 and the second connecting portion 43 connected with a periphery of the first connecting portion 42, and the first connecting portion 42 is arranged as an annular boss protruding towards the negative electrode connecting sheet 5; and
S4, a sealing sheet 7 is connected with an end opening of the liquid injection hole 8 away from the positive electrode connecting sheet 3.

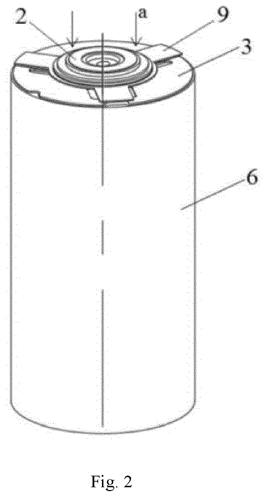

According to the present application, when the positive electrode connecting sheet 3 is provided with a positive electrode welding plane 31, and the negative electrode connecting sheet 5 is provided with a negative electrode welding plane 53, referring to Fig. 2, the positive electrode connecting sheet 3 and the cell electrode group 6 are welded from a side of the positive electrode welding plane 31 facing back to the cell electrode group in a welding direction a, and referring to Fig. 5, the negative electrode connecting sheet 5 and the cell electrode group 6 are welded from a side of the negative electrode welding plane 53 facing back to the cell electrode group 6 in a welding direction c.

According to the present application, the negative electrode connecting sheet 5 includes a negative electrode connecting sheet body 51 and a negative electrode cover plate connecting portion 52 used for being connected with the first connecting portion 42, a negative electrode welding plane 53 is located on the negative electrode connecting sheet body 51, referring to Fig. 6, the negative electrode cover plate connecting portion 52 and the first connecting portion 42 are welded from a side of the first connecting portion 42 facing back to the negative electrode connecting sheet 5 in a welding direction d, and the second connecting portion 43 and the negative electrode end of the housing 1 are welded from outer edges of the both in the welding direction d.

As a relatively preferred specific embodiment of the lithium battery in the present application, the lithium battery includes a housing 1, a positive electrode cover plate component 2, a positive electrode connecting sheet 3, a negative electrode cover plate 4, a negative electrode connecting sheet 5, a cell electrode group 6 located in the housing 1, a sealing sheet 7 and an insulating sheet 9 , a positive electrode end of the cell electrode group 6 is connected with the positive electrode connecting sheet 3, a negative electrode end of the cell electrode group 6 is connected with the negative electrode connecting sheet 5, a side of the positive electrode connecting sheet 3 facing back to the cell electrode group 6 is connected with the insulating sheet 9, a side of the insulating sheet 9 facing back to the positive electrode connecting sheet 3 is connected with the positive electrode cover plate component 2, and a side of the negative electrode connecting sheet 5 facing back to the cell electrode group 6 is connected with the negative electrode cover plate 4.

The positive electrode connecting sheet 3 includes a positive electrode reinforcement structure 32 protruding towards the insulating sheet 9 and a positive electrode welding plane 31 connected with the positive electrode reinforcement structure 32, and a thickness of the positive electrode reinforcement structure 32 is greater than that of the positive electrode welding 31. A ratio of a projection area of the positive electrode cover plate component 2 to that of the positive electrode connecting sheet 3 is 1:4 in a thickness direction of the positive electrode connecting sheet 3, a shape of the insulating sheet 9 corresponds to a shape of the positive electrode reinforcement structure 32, so as to be able to cover the positive electrode reinforcement structure 32. The positive electrode cover plate component 2 includes a fastener 21, a sealing ring 22, a substrate 23 and an insulating ring 24, the sealing ring 22, the insulating sheet 9 and the positive electrode connecting sheet 3 sleeve the fastener 21 in turn, the substrate 23 sleeves a periphery of the sealing ring 22, and is supported on the insulating sheet 9, the fastener 21 is welded with the positive electrode connecting sheet 3, the fastener 21 is provided with a step hole penetrating through the fastener 21, the sealing sheet 7 is clamped into one end of the step hole away from the positive electrode connecting sheet 3 and is in sealed connection with the fastener 21, the liquid injection hole 8 is located at one end of the step hole close to the positive electrode connecting sheet 3, the insulating ring 24 sleeves the periphery of the sealing ring 22 and the periphery of the fastener 21, an upper surface of the substrate 23 is provided with a sinking table 232, the sinking table 232 is provided with a substrate through hole 233 used for installing the sealing ring 22, a periphery of the insulating ring 24 is connected with an internal periphery of the sinking table 232, a periphery of the substrate 23 is provided with a substrate boss 231 extending in a direction away from the substrate 23, the positive electrode end of the housing 1 is provided with a positive electrode connecting port 11 matching with the substrate boss 231, and the substrate 23 is clamped into the positive electrode connecting port 11 and is in sealed connection with the housing 1.

The negative electrode cover plate 4 includes a negative electrode cover plate body 41, a first connecting portion 42 connected with a periphery of the negative electrode cover plate body 41 and a second connecting portion 43 connected with a periphery of the first connecting portion 42, the first connecting portion 42 is arranged as an annular boss protruding towards the negative electrode connecting sheet 5, the positive electrode end of the housing 1 is connected with a periphery of the positive electrode cover plate component 2, and the negative electrode end of the housing 1 is connected with the second connecting portion 43. The negative electrode connecting sheet 5 includes a negative electrode connecting sheet body 51 and a negative electrode cover plate connecting portion 52 used for being connected with the first connecting portion 42, the negative electrode cover plate connecting portion 52 is connected with a periphery of the negative electrode connecting sheet body 51, the negative electrode connecting sheet body 51 includes a negative electrode welding plane 53 and a negative electrode reinforcement structure 54 connected with the negative electrode welding plane 53, the negative electrode reinforcement structure 54 protrudes towards the negative electrode cover plate 4 relative to the negative electrode welding plane 53, and a thickness of the negative electrode cover plate connecting portion 52 is the same as that of the negative electrode reinforcement structure 54 and is greater than a thickness of the negative electrode welding plane 53 and a thickness of the first connecting portion 42.

The positive electrode reinforcement structure 32 and the negative electrode reinforcement structure 54 respectively include a reinforcement boss and a plurality of strip-shaped bosses, the reinforcement bosses are respectively located in a central region of the positive electrode connecting sheet 3 or the negative electrode connecting sheet body 51, the strip-shaped bosses of the positive electrode reinforcement structure 32 are arranged to extend from the corresponding reinforcement boss towards an outer side to an edge of the positive electrode connecting sheet, and the strip-shaped boss of the negative electrode reinforcement structure 54 is arranged to extend from the corresponding reinforcement boss towards an outer side to the negative electrode cover plate connecting portion 52; and groove holes used for permeating of an electrolyte are respectively formed in the positive electrode welding plane 31 and the negative electrode welding plane 53, and the groove holes are located on one side or two sides of the strip-shaped bosses, and are arranged as strip-shaped through holes extending in a length direction of the strip-shaped bosses corresponding to the groove holes.

Referring to Fig. 2 to Fig. 7, a method for preparing a lithium battery provided by the above specific embodiment includes the following steps:
S1, referring to Fig. 2, a positive electrode connecting sheet 3, an insulating sheet 9 and a positive electrode cover plate component 2 are connected in turn and integrated into a whole, so that a substrate 23 is supported on the insulating sheet 9, a positive electrode reinforcement structure 32 protrudes towards the insulating sheet 9, the positive electrode connecting sheet 3 is placed on a positive electrode end of a cell electrode group 6, and laser welding is performed from a side of the positive electrode connecting sheet 3 facing the positive electrode cover plate component 2 in the welding direction a, so that a side of the positive electrode connecting sheet 3 facing back to the positive electrode cover plate component 2 is connected with the positive electrode end of the cell electrode group 6, to form the cell electrode group component;
S2, referring to Fig. 3 and Fig. 4, the cell electrode group component is placed into a housing 1 from an opening of a negative electrode end of the housing 1, so that the substrate 23 is clamped into a positive electrode connecting opening 11, an edge of the positive electrode connecting opening 11 is in lap joint on a substrate boss 231 and is flat with a top of the substrate 23, and laser welding is performed on the housing 1 and the substrate 23 in a welding direction b, so that a periphery of the positive electrode cover plate component 2 is in sealed connection with the housing 1.
S3, referring to Fig. 5 and Fig. 6, a negative electrode connecting sheet 5 is placed on a negative electrode end of the cell electrode group 6, so that a negative electrode reinforcement structure 54 protrudes back to the cell electrode group 6, laser welding is performed from a side of the negative electrode welding plane 53 facing back to the cell electrode group 6 in a welding direction c, so that the negative electrode connecting sheet 5 is connected with the cell electrode group 6, a negative electrode cover plate 4 is placed on the negative electrode connecting sheet 5, so that a first connecting portion 42 protrudes towards the negative electrode connecting sheet 5 and makes contact with a negative electrode cover plate connecting portion 52, a second connecting portion 43 is lap joint on the negative electrode end of the housing 1, laser penetration welding is performed from a side of the first connecting portion 42 facing back to the negative electrode connecting sheet 5 in a welding direction d, to enable the negative electrode cover plate 4 to be connected with the negative electrode connecting sheet 5, and laser welding is performed from outer edges of the negative electrode cover plate 4 and the housing 1 in a welding direction d, to enable the second connecting portion 43 of the negative electrode cover plate 4 to be in sealed connection with the negative electrode end of the housing 1; and
S4, referring to Fig. 7, a sealing sheet 7 is clamped into an end opening of a liquid injection hole 8 away from the positive electrode connecting sheet 3, and laser welding is performed in a welding direction f, so that the sealing sheet 7 is in sealed connection with the liquid injection hole, to complete installing of the lithium battery.

From the above description, it can be seen that according to the lithium battery of the present application, the projection area of the positive electrode cover plate component 2 is less than the projection area of the positive electrode connecting sheet 3 in the thickness direction of the positive electrode connecting sheet 3, to realize direct welding on a side of the positive electrode connecting sheet 3 connected with the positive electrode cover plate component 2 during connecting and fixing of the positive electrode connecting sheet 3 and the cell electrode group 6, which improves whole structural stability of the lithium battery; the negative electrode cover plate 4 includes the negative electrode cover plate body 41, the first connecting portion 42 and the second connecting portion 43, the first connecting portion 42 on the negative electrode cover plate 4 is welded with the negative electrode connecting sheet 5, so that the negative electrode connecting sheet 5 can be better fit with the negative electrode cover plate 4, the welding area is large, the process is easy to operate, and the overcurrent capability is high; the positive electrode cover plate component 2 and the negative electrode cover plate 4 are respectively sealed with the housing 1 in a mode of welding, which not only improves the sealing performance of the connection between the housing 1 and the cover plate, but also eliminates the limit of the cell electrode group 6 by the groove rolling process of the housing 1, and then the space, containing the cell electrode group 6, in the housing 1 can be increased, which is conducive to increasing the battery capacity and the energy density.

The above is only the better implementation of the present application and is not intended to limit the present application, and any modification, equivalent replacement, improvement, etc. made within the spirit and the principle of the present application shall be included in the scope of protection of the present application.

## Claims

1. A lithium battery, comprising a housing (1), a positive electrode cover plate component (2), a positive electrode connecting sheet (3), a negative electrode cover plate (4), a negative electrode connecting sheet (5), a cell electrode group (6) located in the housing (1), and a sealing sheet (7), wherein a positive electrode end of the cell electrode group (6) is connected with the positive electrode connecting sheet (3), a negative electrode end of the cell electrode group (6) is connected with the negative electrode connecting sheet (5), a side of the positive electrode connecting sheet (3) facing back to the cell electrode group (6) is in insulating connection with the positive electrode cover plate component (2), a side of the negative electrode connecting sheet (5) facing back to the cell electrode group (6) is connected with the negative electrode cover plate (4), the positive electrode cover plate component (2) is provided with a liquid injection hole (8), and an end opening of the liquid injection hole (8) away from the positive electrode connecting sheet (3) is connected with the sealing sheet (7); and a projection area of the positive electrode cover plate component (2) is less than a projection area of the positive electrode connecting sheet (3) in a thickness direction of the positive electrode connecting sheet (3), the negative electrode cover plate (4) comprises a negative electrode cover plate body (41), a first connecting portion (42) connected with a periphery of the negative electrode cover plate body (41) and a second connecting portion (43) connected with a periphery of the first connecting portion (42), the first connecting portion (42) is arranged as an annular boss protruding towards the negative electrode connecting sheet (5), a positive electrode end of the housing (1) is connected with a periphery of the positive electrode cover plate component (2), and a negative electrode end of the housing (1) is connected with the second connecting portion (43).

2. The lithium battery according to claim 1, wherein the positive electrode cover plate component (2) comprises a fastener (21), a sealing ring (22) and a substrate (23), an insulating sheet (9) is arranged between the substrate (23) and the positive electrode connecting sheet (3), the sealing ring (22), the insulating sheet (9) and the positive electrode connecting sheet (3) sleeve the fastener (21) in turn, the substrate (23) sleeves a periphery of the sealing ring (22), and is supported on the insulating sheet (9), the fastener (21) is welded with the positive electrode connecting sheet (3), the fastener (21) is provided with a step hole penetrating through the fastener (21), the sealing sheet (7) is clamped into one end of the step hole away from the positive electrode connecting sheet (3) and is in sealed connection with the fastener (21), and the liquid injection hole (8) is located at one end of the step hole close to the positive electrode connecting sheet (3).

3. The lithium battery according to claim 1, wherein a cell component (11) comprises a positive electrode cover plate (111) fixed to a positive electrode, and the positive electrode cover plate (111) is provided with a conductive sheet (113) electrically connected with a cell (112); and
the battery comprises an insulating gasket (14) arranged between the positive electrode cover plate (111) and an edge rolling stop end (122), and a through hole allowing the conductive sheet (113) to penetrate out is formed in the insulating gasket (14).

4. The lithium battery according to claim 2, wherein a periphery of the substrate (23) is provided with a substrate boss (231) extending in a direction away from the substrate (23), a positive electrode end of the housing (1) is provided with a positive electrode connecting opening (11) matching with the substrate boss (231), and the substrate (23) is clamped into the positive electrode connecting opening (11) and is in sealed connection with the housing (1).

5. The lithium battery according to any one of claims 1 to 4, wherein the negative electrode connecting sheet (5) comprises a negative electrode connecting sheet body (51) and a negative electrode cover plate connecting portion (52) used for being connected with the first connecting portion (42), and a thickness of the negative electrode cover plate connecting portion (52) is greater than a thickness of the first connecting portion (42).

6. A method for preparing a lithium battery, comprising the following steps:
S1, connecting, after insulating connection of a positive electrode connecting sheet (3) and a positive electrode cover plate component (2), a side of the positive electrode connecting sheet (3) facing back to the positive electrode cover plate component (2) with a positive electrode end of a cell electrode group (6), to form a cell electrode group component, wherein the positive electrode cover plate component (2) is provided with a liquid injection hole (8), and a projection area of the positive electrode cover plate component (2) is less than a projection area of the positive electrode connecting sheet (3) in a thickness direction of the positive electrode connecting sheet (3);
S2, placing the cell electrode group component into a housing (1) from a negative electrode end of the housing (1), to enable the positive electrode cover plate component (2) to be clamped into a positive electrode end of the housing (1), and connecting a periphery of the positive electrode cover plate component (2) with the housing (1);
S3, connecting a negative electrode connecting sheet (5) with a negative electrode end of the cell electrode group (6), connecting a protruding side of a first connecting portion (42) of the negative electrode cover plate (4) with the negative electrode connecting sheet (5), and connecting a second connecting portion (43) of the negative electrode cover plate (4) with the negative electrode end of the housing (1), wherein the negative electrode cover plate (4) comprises a negative electrode cover plate body (41), the first connecting portion (42) connected with a periphery of the negative electrode cover plate body (41) and the second connecting portion (43) connected with a periphery of the first connecting portion (42), and the first connecting portion (42) is arranged as an annular boss protruding towards the negative electrode connecting sheet (5); and
S4, connecting a sealing sheet (7) with an end opening of the liquid injection hole (8) away from the positive electrode connecting sheet (3).

7. The method for preparing a lithium battery according to claim 6, before a step of covering a negative electrode connecting sheet (13) on an opening end (121) and performing laser welding, further comprising: performing edge rolling on the opening end (121), and forming a lip edge (123) abutting against a periphery of a negative electrode on the opening end (121); and bending an edge of the negative electrode connecting sheet (13) to form a step (131) fit with the lip edge (123).

8. The method for preparing a lithium battery according to claim 7, wherein the negative electrode connecting sheet (5) comprises a negative electrode connecting sheet body (51) and a negative electrode cover plate connecting portion (52) used for being connected with the first connecting portion (42), a negative electrode welding plane (53) is located on the negative electrode connecting sheet body (51), the negative electrode cover plate connecting portion (52) and the first connecting portion (42) are welded from a side of the first connecting portion (42) facing back to the negative electrode connecting sheet (5), and the second connecting portion (43) and the negative electrode end of the housing (1) are welded from outer edges of the second connecting portion and the housing.

9. The method for preparing a lithium battery according to claim 6, wherein the positive electrode cover plate component (2) comprises a fastener (21), a sealing ring (22) and a substrate (23), an insulating sheet (9) is arranged between the substrate (23) and the positive electrode connecting sheet (3), the sealing ring (22), the insulating sheet (9) and the positive electrode connecting sheet (3) sleeve the fastener (21) in turn, the substrate (23) sleeves a periphery of the sealing ring (22), and is supported on the insulating sheet (9), the fastener (21) is welded with the positive electrode connecting sheet (3), the fastener (21) is provided with a step hole penetrating through the fastener (21), the sealing sheet (7) is clamped into one end of the step hole away from the positive electrode connecting sheet (3) and is welded with the fastener (21), and the liquid injection hole (8) is located at one end of the step hole close to the positive electrode connecting sheet (3).

10. The method for preparing a lithium battery according to claim 9, wherein a periphery of the substrate (23) is provided with a substrate boss (231) extending in a direction away from the substrate (23), the positive electrode end of the housing (1) is provided with a positive electrode connecting opening (11) matching with the substrate boss (231), and the substrate (23) is clamped into the positive electrode connecting opening (11) and is welded with the housing (1).
